# EUROPÄISCHE PATENTSCHRIFT

(11) **EP 4 218 395 B1**
(45) Veröffentlichungstag und Bekanntmachung des Hinweises auf die Patenterteilung: **15.01.2025**
(21) Anmeldenummer: 22207251.4
(22) Anmeldetag: 14.11.2022
(51) Int. Cl.: A01D 43/08

(54) **SELBSTFAHRENDER FELDHÄCKSLER SOWIE VERFAHREN ZU DESSEN BETRIEB**
SELF-PROPELLED FORAGE HARVESTER AND METHOD FOR OPERATING THE SAME
RAMASSEUSE-HACHEUSE AUTOMOTRICE ET PROCÉDÉ POUR SON FONCTIONNEMENT

(30) Priorität: 27.01.2022 DE 102022101896
(43) Veröffentlichungstag der Anmeldung: 02.08.2023
(73) Patentinhaber: CLAAS Selbstfahrende Erntemaschinen GmbH, 33428 Harsewinkel (DE)
(72) Erfinder: Laumeier, Ludger, 33397 Rietberg (DE); Pape, Nils, 48143 Münster (DE); Spachtholz, Christian, 88370 Ebenweiler (DE); Wehner, Gregor, 88356 Ostrach Unterweiler (DE); Look, Stefan, 48231 Warendorf (DE); Rautenberg, Andreas, 88422 Oggelshausen (DE)
(74) Vertreter: CLAAS 365FarmNet GmbH

(56) Entgegenhaltungen:
- EP-A1- 1 518 453
- EP-A1- 2 620 051
- EP-A2- 1 522 216
- US-B1- 8 915 766

## Beschreibung

Die Erfindung betrifft einen selbstfahrenden Feldhäcksler gemäß dem Oberbegriff des Anspruchs 1 sowie ein Verfahren zum Betrieb desselben gemäß dem Anspruch 10.

Der Feldhäcksler ist eine landwirtschaftliche Arbeitsmaschine und wird beispielsweise zur Aufnahme, Zerkleinerung und Verladung von Erntegut eingesetzt. Als "selbstfahrender Feldhäcksler" verfügt selbiger über einen eigenen Antrieb und ist somit eigenständig, das heißt unabhängig von einer Zugmaschine, einsetzbar sind. Während sich Feldhäcksler hinsichtlich einer Bauart ihrer Schneidorgane prinzipiell in drei Hauptformen unterscheiden lassen, bezieht sich die vorliegende Anmeldung vorwiegend auf Trommelfeldhäcksler. Darüber hinaus gibt es noch Schlegelfeldhäcksler und Scheibenradhäcksler.

Ein derartiger selbstfahrender Feldhäcksler umfasst eine Mehrzahl von Arbeitsorganen sowie mindestens eine Behandlungsvorrichtung. Hierbei ist zumindest ein Arbeitsorgan von einem Häckselorgan und mindestens ein weiteres Arbeitsorgan von einer Schleifeinrichtung gebildet. Das Häckselorgan weist eine um eine Drehachse drehantreibbare Häckseltrommel sowie eine Mehrzahl von an der Häckseltrommel gelagerten Messern auf. Weiterhin ist eine Gegenschneide vorgesehen, mit der die an der Häckseltrommel gelagerten Messer zusammenwirken. Dies erfolgt typischerweise derart, dass die Messer, die an der Häckseltrommel gelagert sind, im Zuge eines Drehantriebs der Häckseltrommel nach an der Gegenschneide vorbei geführt werden und gemeinsam mit letzterer einen Schneidspalt begrenzen. In diesem Zusammenhang wird die Häckseltrommel um die Drehachse beschleunigt, sodass die an der Häckseltrommel gelagerten Messer im Rahmen einer Drehbewegung immer wieder an der Gegenschneide entlang geführt werden. Hierdurch werden insbesondere an den an der Häckseltrommel gelagerten Messern Verschleißerscheinungen verursacht, die es nötig machen, die Messer nachzuschleifen beziehungsweise auszutauschen. Das Nachschleifen erfolgt mittels der Schleifeinrichtung.

Hierzu umfasst die Schleifeinrichtung mindestens ein Schleifelement, das dazu geeignet ist, im Zuge eines Schleifvorgangs in schleifenden Kontakt mit Messerschneiden der Messer zu treten und die Messerschneiden auf diese Weise zu schleifen. Zudem ist das Schleifelement relativ zu dem Häckselorgan bewegbar ausgebildet, sodass das Schleifelement im Zuge eines Schleifvorgangs zumindest im Wesentlichen alle Stellen der Messerschneiden erreichen kann. In diesem Zusammenhang ist das Schleifelement insbesondere entlang einer Achse parallel zu der Drehachse bewegbar, wobei im Zuge eines Schleifvorgangs die Häckseltrommel drehangetrieben und die daran montierten Messer wiederholt an dem Schleifelement vorbei geführt werden und mit diesem in Eingriff treten. Mit anderen Worten wird das Schleifelement derart bewegt, dass es zumindest im Wesentlichen entlang einer Breite der Häckseltrommel bewegt wird, sodass es kontinuierlich in Eingriff mit allen an der Häckseltrommel gelagerten Messern kommt, sofern die Häckseltrommel während des Schleifvorgangs drehangetrieben wird, und diese dadurch schleift.

Des Weiteren umfasst die Behandlungsvorrichtung mindestens einen Behälter zur Vorhaltung eines fließfähigen Behandlungsmediums und mindestens eine Leitung zur Leitung des Behandlungsmediums von dem Behälter in Richtung der Schleifeinrichtung. Außerdem ist eine Mehrzahl von Düsen vorgesehen, mittels der das Behandlungsmedium ausbringbar ist. Hierfür sind die Düsen entlang der Häckseltrommel verteilt sowie korrespondierend zu einem Bewegungsraum des Schleifelements angeordnet, sodass im Zuge eines Schleifvorgangs das Behandlungsmedium mittels der Düsen auf das Schleifelement leitbar ist. Das Behandlungsmittel kann beispielsweise ein Kühlmittel sein, um die bei dem Schleifvorgang entstehende Wärme abzutransportieren. Außerdem kann es sich bei dem Behandlungsmedium um ein Schleifmittel handeln, welches eingesetzt wird, um ein besonders vorteilhaftes Schleifergebnis und/oder einen besonders geringen Verschleiß insbesondere der Messer zu bewirken.

Derartige Feldhäcksler sind dem Stand der Technik in vielfältiger Ausgestaltung als bekannt zu entnehmen. Beispielsweise ist der EP 1 537 770 B1 ein Feldhäcksler als bekannt zu entnehmen, der eine Speichervorrichtung und mehrere Arbeitsorgane umfasst, wobei zumindest ein Arbeitsorgan als Schleifvorrichtung ausgebildet ist. Hierbei umfasst die Speichervorrichtung zumindest ein Flüssigkeit aufnehmendes Behältnis, wobei die darin aufgenommene Flüssigkeit beispielsweise an die Schleifvorrichtung und/oder eine Gegenschneide eines weiteren als Häckseltrommel ausgeführten Arbeitsorgans weiterleitbar ist. Hierbei ist vorgesehen, dass die Flüssigkeit, bei der es sich beispielsweise um Kühlflüssigkeit handelt, aus Düsen austritt.

Außerdem ist der DE 103 45 251 B3 ein selbstfahrender Feldhäcksler als bekannt zu entnehmen, der eine Einrichtung zur Zuführung eines zumindest annähernd fließfähigen Mediums aufweist. Eine Zuführung der Flüssigkeit kann beispielsweise derart erfolgen, dass aus einem Behälter mittels eines Schlauchs die Flüssigkeit nach manueller oder automatischer Freigabe durch Schwerkraft auf die Schleifstelle läuft. Außerdem ist eine gezielte Zuführung über Pumpen und Düsen denkbar. Weiterhin ist es denkbar, eine besonders gleichmäßige Benetzung durch einen Sprühnebel zu bewirken.

Weiterhin ist der EP 2 944 182 B1 ein Feldhäcksler als bekannt zu entnehmen, der eine Flusserzeugungseinrichtung aufweist, mittels der ein Fluidstrom erzeugt werden kann. Hierbei kann es vorgesehen sein, dass der Fluidstrom eine Mischung aus Luft und einer Flüssigkeit, beispielsweise Wasser, aufweist. Weiterhin kann es vorgesehen sein, dass die Flüssigkeit beziehungsweise die Mischung mittels Düsen ausgebracht wird, wobei die Düsen mit Steuerventilen ausgebildet sind. In diesem Zusammenhang ist es beispielsweise vorgesehen, die Ventile derart zu steuern, dass ein gepulster Fluidstrom bereitgestellt werden kann.

Ein weiterer Feldhäcksler ist aus EP2620051 A1 bekannt. 1f

Nachteilig bei dem vorgenannten Stand der Technik ist, dass die Häckseltrommel und/oder die Gegenschneide jeweils zumindest im Wesentlichen über eine gesamte Breite ständig mit einem jeweiligen Behandlungsmedium besprüht werden. Dabei wird auch an Stellen, an denen momentan kein Schleifprozess stattfindet, unnötig Behandlungsmedium ausgebracht. Dies ist einerseits unökologisch und andererseits daher nachteilhaft, da das Behandlungsmedium entsprechend an dem Feldhäcksler mitgeführt werden muss. Dies hat zur Folge, dass Tanks besonders groß dimensioniert werden müssen oder im Falle kleinerer Tanks häufige Stopps zwecks Nachfüllens nötig sind.

Der vorliegenden Erfindung liegt die Aufgabe zugrunde, einen selbstfahrenden Feldhäcksler bereitzustellen, der weniger Behandlungsmedium verbraucht.

Die Aufgabe wird durch einen selbstfahrenden Feldhäcksler gemäß Anspruch 1 sowie durch ein Verfahren gemäß Anspruch 10 gelöst. Vorteilhafte Ausgestaltungen sind Gegenstand der Unteransprüche.

Es ist erfindungsgemäß vorgesehen, dass die Düsen in Abhängigkeit einer aktuellen Position des Schleifelements im Zuge eines Schleifvorgangs wechselweise aktivierbar und deaktivierbar sind. Hierbei werden die Düsen jeweils derart aktiviert beziehungsweise deaktiviert, dass insbesondere in unmittelbarer Umgebung einer momentanen Schleifstelle, an der das Schleifelement mit den Messern zusammenwirkt, die jeweilige/n Düse/n aktiviert ist beziehungsweise sind und somit Behandlungsmedium auf die Schleifstelle leitet beziehungsweise leiten. Mit anderen Worten ist die jeweilige Düse beziehungsweise sind die jeweiligen Düsen lediglich dort aktiviert und bringen Behandlungsmedium aus, wo das Schleifelement aktuell befindlich ist und somit ein Schleifvorgang an dieser Schleifstelle stattfindet. Alle Düsen, die sich nicht in unmittelbarer Nähe zu der momentanen Schleifstelle befinden, werden beziehungsweise sind abgeschaltet und bringen somit kein Behandlungsmedium aus. Auf diese Weise wird das Behandlungsmedium lediglich örtlich an dem Schleifelement ausgebracht und nicht wie beim Stand der Technik üblich fortwährend über zumindest im Wesentlichen die gesamte Breite der Häckseltrommel. Hierdurch ergibt sich der Vorteil, dass das Behandlungsmedium besonders zielgerichtet eingesetzt werden kann und somit besonders geringe Mengen eingesetzt werden müssen. Vorteilhafterweise lässt sich hierdurch ein besonders ökologischer und effizienter Betrieb des Feldhäckslers bewerkstelligen.

Als weiterer Vorteil ergibt sich, dass der Eintrag hoher Mengen eines jeweiligen Behandlungsmediums, das dem Erntegut schaden kann, reduziert wird. Somit tritt das Behandlungsmedium, dass im Zuge eines Schleifvorgangs ausgebracht wird, regelmäßig in Kontakt mit dem jeweiligen Erntegut, das mittels des Feldhäckslers verarbeitet wird. Das Erntegut kann - je nach Art des Behandlungsmediums - beispielsweise beschleunigt verderben, wenn es feucht ist. Ferner kann das Erntegut infolge eines betragsmäßig zu hohen Eintrags eines Behandlungsmediums, insbesondere in Form einer Kühlflüssigkeit, für Tiere ungenießbar werden. Bei einem reduzierten Eintrag des Behandlungsmediums, der mittels des erfindungsgemäßen Feldhäckslers erreicht wird, sind diese Risiken minimiert.

Ferner ist mittels des erfindungsgemäßen Feldhäckslers das Risiko minimiert, dass sich - gemäß Erfahrungen aus der Praxis - Materialablagerungen bilden können, die zu einem Verstopfen der Häckseltrommel führen und somit den Betrieb des Feldhäckslers stören. Der geringere Eintrag eines Behandlungsmediums, der infolge der Mitführung der Düse mit dem Schleifelement gegenüber dem Stand der Technik realisierbar ist, hilft dies zu vermeiden.

Schließlich hat der geringere Eintrag des Behandlungsmediums den Vorteil, dass beim Schleifprozess eine Brandgefahr durch Funkenflug vermieden wird. Dies ist insbesondere dann gegeben, wenn das Behandlungsmedium entflammbar ist. Der geringere Eintrag des Behandlungsmediums führt mithin zum Eintrag geringerer Brandlasten als dies im Stand der Technik der Fall ist.

In einer besonders vorteilhaften Ausgestaltung ist vorgesehen, dass die Düsen jeweils mit einem Ventil zusammenwirken, wobei die Ventile getrennt ansteuerbar und die Düsen auf diese Weise wechselweise aktivierbar und deaktivierbar sind. Auf diese Weise lassen sich die jeweiligen Düsen besonders einfach ansteuern, sodass der Feldhäcksler vorteilhafterweise besonders einfach und unkompliziert betreibbar ist.

In einer weiteren besonders vorteilhaften Ausgestaltung ist vorgesehen, dass die Behandlungsvorrichtung dazu eingerichtet ist, zu jedem Zeitpunkt eines jeweiligen Schleifvorgangs nur die Düsen zu aktivieren, die in Abhängigkeit einer Position des Schleifelements dazu geeignet sind, das Behandlungsmedium unmittelbar auf das Schleifelement zu leiten. Hierbei kann es sich um eine einzelne Düse oder um eine Mehrzahl von Düsen handeln, die in unmittelbarer Nähe der Schleifstelle befindlich sind. Vorteilhafterweise wird somit kein Behandlungsmedium dort ausgebracht, wo momentan kein Schleifvorgang stattfindet. Mit anderen Worten wird das Behandlungsmedium lediglich dort eingesetzt, wo es nötig ist, nämlich an beziehungsweise in unmittelbarer Nähe der Schleifstelle. Vorteilhafterweise wird hierdurch besonders wenig Behandlungsmedium benötigt, sodass der Feldhäcksler besonders sparsam und ressourcenschonend betrieben werden kann. Außerdem hat dies zur Folge, dass die Behälter im Vergleich zum Stand der Technik mit einem geringeren Volumen dimensioniert werden können, was eine Konstruktion des Feldhäckslers besonders einfach macht.

Weiterhin ist gemäß einer besonders vorteilhaften Ausgestaltung eine Steuerung vorgesehen, mittels der eine Zuleitung mindestens eines von der Behandlungsvorrichtung vorgehaltenen Behandlungsmediums zu dem Schleifelement steuerbar ist. In diesem Zusammenhang ist es beispielsweise denkbar, dass mittels der Steuerung ein Volumenstrom gesteuert wird, wodurch gesteuert werden kann, wie viel Behandlungsmedium pro Zeit ausgeleitet wird. Außerdem ist es denkbar, dass mittels der Steuerung die jeweiligen Ventile der jeweiligen Düsen gesteuert werden und somit diese aktiviert beziehungsweise deaktiviert werden können. Hierdurch ergibt sich der Vorteil, dass der Feldhäcksler besonders individuell und bedarfsgerecht betrieben werden kann.

Ein weiterer Vorteil ergibt sich dann, wenn das Schleifelement während eines Schleifvorgangs parallel zu der Drehachse der Häckseltrommel bewegbar ist. Eine solche Führung des Schleifelements ist besonders einfach umsetzbar, wobei ein schleifender Kontakt des Schleifelements mit allen Stellen der Messerschneiden aller Messer ergänzend zu der Bewegung des Schleifelements dadurch sichergestellt werden kann, dass die Häckseltrommel drehangetrieben wird und die Messer auf diese Weise jeweils wiederholt an dem Schleifelement vorbei führt.

Vorteilhafterweise ist in einer weiteren Ausgestaltung vorgesehen, dass mindestens ein Behandlungsmedium von einer Kühlflüssigkeit oder von einer Schleifemulsion gebildet ist. Im Rahmen des Schleifvorgangs sowie im Zusammenhang mit dem Häckseln entstehen im Bereich der Messerschneiden große Kräfte und Wärme. Die Kühlflüssigkeit und/oder die Schleifemulsion können eingesetzt werden, um die Kräfte zu vermindern, indem beispielsweise eine Reibung zwischen Messerschneide und Schleifelement vermindert wird. Außerdem kann durch das Behandlungsmedium in Form der Kühlflüssigkeit und/oder der Schleifemulsion die entstehende Wärme abtransportiert werden. Dies hat zum Vorteil, dass die Messerschneiden besonders präzise geschliffen werden können und außerdem besonders schonend betrieben werden können, wodurch deren Standzeit besonders lang ist. Außerdem hat sich in Versuchen gezeigt, dass die Kühlflüssigkeit und/oder die Schleifemulsion geräusch-/ beziehungsweise vibrationsdämpfende Eigenschaften haben, sodass der Feldhäcksler zudem besonders leise und komfortabel betrieben werden kann.

Weiterhin ist die Erfindung dann besonders vorteilhaft, wenn die Behandlungsvorrichtung mindestens einen weiteren Behälter aufweist, der zur Vorhaltung eines weiteren fließfähigen Behandlungsmediums eingerichtet ist, wobei die Behandlungsvorrichtung mindestens eine weitere Leitung zur Leitung des weiteren Behandlungsmediums von dem weiteren Behälter in Richtung der Schleifeinrichtung umfasst. Auf diese Weise können mehrere, voneinander verschiedene Behandlungsmedien vorgehalten werden. In diesem Zusammenhang ist es beispielsweise denkbar, dass ein Behälter eine Kühlflüssigkeit umfasst und der andere Behälter eine Schleifemulsion. Weiterhin ist es denkbar, dass die beiden Behandlungsmedium abwechselnd durch die Düse ausgebracht werden, oder dass die beiden Behandlungsmedien gemischt und sodann als Mischung mittels der Düse auf das Schleifelement geleitet werden. Außerdem ist es denkbar, dass ein Behälter ein Pflegemittel enthält, dass nach Abschluss des Schleifvorganges auf das Schleifelement und/oder die Messer aufgebracht wird, um diese zu pflegen. Vorteilhafterweise lässt sich hierdurch ein besonders individueller und bedarfsgerechter Betrieb des Feldhäckslers bewerkstelligen.

In einer weiteren besonders vorteilhaften Ausgestaltung ist vorgesehen, dass die Behandlungsvorrichtung dazu eingerichtet ist, im Zuge eines Schleifvorgangs dem Schleifelement wechselweise das erste oder das weitere Behandlungsmedium oder beide Behandlungsmedien zugleich zuzuführen. Hierdurch können die Behandlungsmedien vorteilhafterweise gemischt und somit besonders bedarfsgerecht abgestimmt werden.

Eine weitere besonders vorteilhafter Ausgestaltung ergibt sich durch eine Steuerung, mittels der eine Zuleitung mindestens eines von der Behandlungsvorrichtung vorgehaltenen Behandlungsmediums zu dem Schleifelement steuerbar ist. In diesem Zusammenhang ist es beispielsweise denkbar, das Behandlungsmedium in bestimmten Zeitabständen oder an bestimmten Positionen einzuleiten. Hierdurch kann das Behandlungsmedium vorteilhafterweise besonders sparsam und effektiv eingesetzt werden. Weiterhin ist es möglich, zumindest zeitweise zwischen Nassschleifen und Trockenschleifen zu wechseln. Hierdurch lässt sich in Abhängigkeit von den Messerschneiden, beispielsweise in Bezug auf deren Material und/oder Zustand, ein Schleifmodus besonders bedarfsgerecht anpassen. Vorteilhafterweise kann hierdurch ein besonders gutes Schliffbild erzielt werden.

Ein zweiter Aspekt der Erfindung betrifft ein Verfahren zum Betrieb des vorgenannten selbstfahrenden Feldhäckslers. Die voranstehende Beschreibung sowie Vorteile gelten gleichermaßen für das Verfahren und umgekehrt.

In einer vorteilhaften Ausgestaltung des Verfahrens werden zu jedem Zeitpunkt eines jeweiligen Schleifvorgangs nur die Düsen aktiviert, die in Abhängigkeit einer Position des Schleifelements dazu geeignet sind, das Behandlungsmedium unmittelbar auf das Schleifelement zu leiten. Bei dieser Ausgestaltung des Verfahrens ist der Verbrauch des Behandlungsmediums minimiert, da sichergestellt ist, dass es das Schleifelement erreicht und somit seinen Nutzen entfalten kann. Ein Austrag von Behandlungsmedium, das keinen unmittelbaren Nutzen entfaltent, ist zumindest im Wesentlichen vermieden.

Das Verfahren ist dann besonders vorteilhaft einsetzbar, wenn die Zuleitung mindestens eines Behandlungsmediums, insbesondere eines Kühlmediums oder einer Schleifemulsion, mittels einer Steuerung in Abhängigkeit von Maschinendaten des Feldhäckslers, einer Menge von im Zuge eines Schleifvorgangs ausgebrachten Volumens des jeweiligen Behandlungsmediums, und/oder in Abhängigkeit einer Feuchtigkeit des jeweiligen Ernteguts gesteuert wird. Bei den Maschinendaten kann es sich beispielsweise um ein Drehmoment oder eine Drehzahl der Häckseltrommel handelt. In diesem Zusammenhang ist es beispielsweise denkbar, dass umso mehr Behandlungsmedium bereitgestellt wird, je schneller die Häckseltrommel dreht. Außerdem kann es in Abhängigkeit von dem Erntegut notwendig sein, dieses nicht zu feucht werden zu lassen. Dementsprechend kann es beispielsweise vorgesehen sein, die Menge des verwendeten Behandlungsmediums zu verringern, sobald die Feuchtigkeit des Ernteguts einen definierten Grenzwert überschreitet. Hierdurch ist es vorteilhafterweise möglich, den Feldhäcksler besonders individuell und bedarfsgerecht zu betreiben und außerdem das Erntegut besonders schonend zu behandeln.

Vorteilhafterweise sieht eine weitere Ausgestaltung des Verfahrens vor, dass ein Volumenstrom des jeweiligen Behandlungsmediums im Zuge eines Schleifvorgangs oder zwischen verschiedenen Schleifvorgängen verändert wird. Während des Schleifvorgangs tritt sowohl an dem Schleifelement als auch an den Messern Verschleiß auf. Daher kann es notwendig sein, den Volumenstrom beispielsweise in Abhängigkeit von diesem Verschleiß derart einzustellen, dass Schleifelement und Messer unabhängig von deren aktuellem Zustand, optimal mit Behandlungsmedium versorgt werden. Diese optimalen Einstellungen können im Vorfeld mittels empirischer Versuche bestimmt werden.

Die Erfindung ist nachstehend anhand eines Ausführungsbeispiels, das in den Figuren dargestellt ist, näher erläutert. Es zeigt:
- Fig. 1:: eine schematische Übersichtsansicht eines erfindungsgemäßen selbstfahrenden Feldhäckslers von der Seite;
- Fig. 2:: eine schematische Ansicht des Feldhäckslers von hinten mit Sicht auf eine Häckseltrommel;
- Fig. 3:: eine schematische Seitenansicht der Häckseltrommel mit einer Detailansicht des Schleifelements; und
- Fig. 4:: eine schematische Darstellung der Behandlungsvorrichtung und der Häckseltrommel sowie einer Gegenschneide.

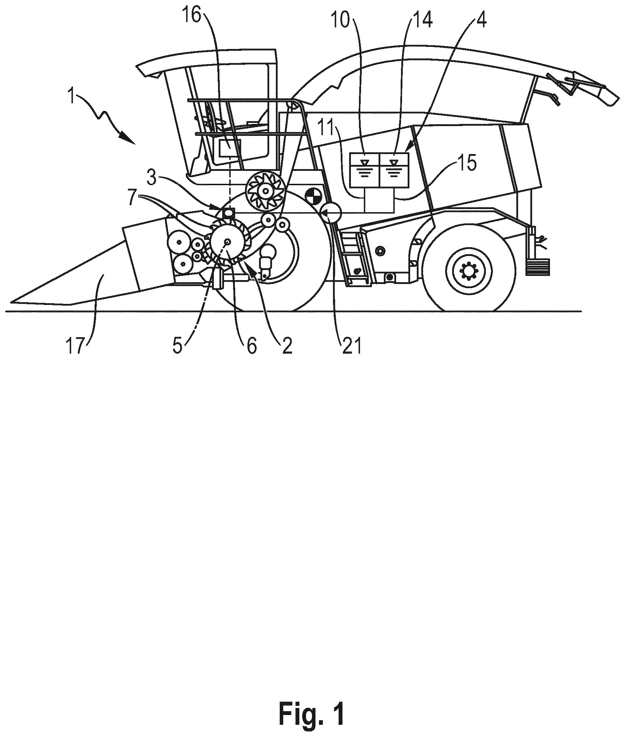

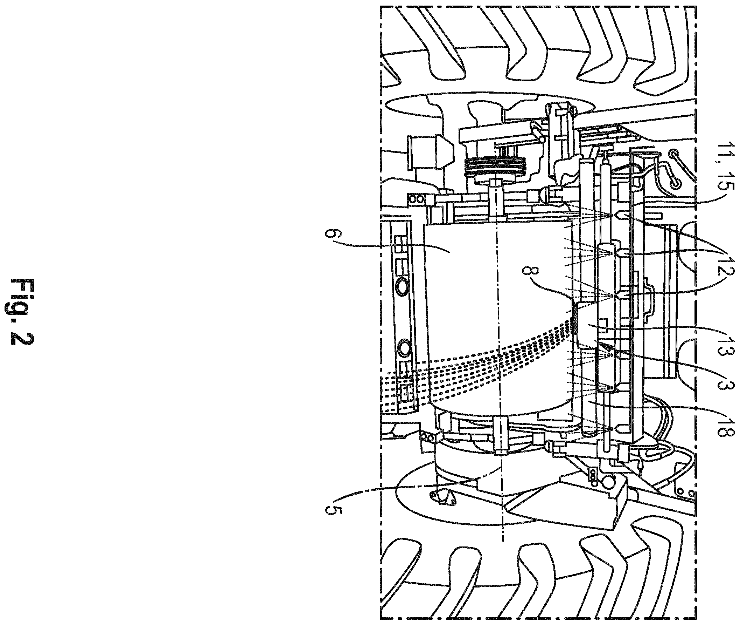

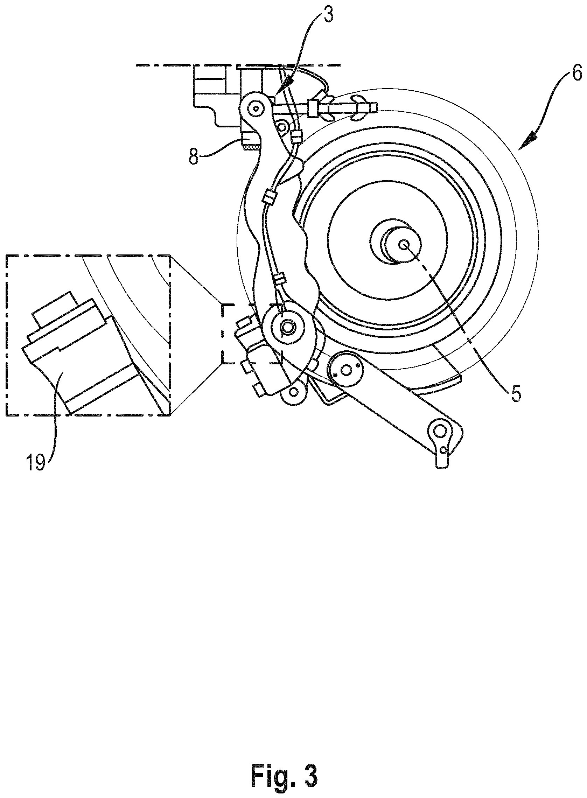

**Figur 1** zeigt in einer schematischen Ansicht einen erfindungsgemäßen selbstfahrenden Feldhäcksler **1.** Der Feldhäcksler **1** ist dazu ausgebildet, über ein Feld zu fahren und darauf befindliches Erntegut aufzunehmen und sodann zu zerkleinern. Dafür umfasst der Feldhäcksler **1** eine Mehrzahl von Arbeitsorganen sowie mindestens eine Behandlungsvorrichtung **4,** wobei zumindest ein Arbeitsorgan von einem Häckselorgan **2** und mindestens ein Arbeitsorgan von einer Schleifeinrichtung **3** gebildet sind. Der Feldhäcksler **1** umfasst in dem gezeigten Beispiel ein Maisgebiss **17,** mittels dessen auf dem Feld aufstehendes Erntegut in Form von Mais abgeschnitten und sodann dem Häckselorgan **2** zuführbar ist. Wie in Zusammenschau der **Figuren 2** **und** **3** erkennbar ist, weist das Häckselorgan **2** eine um eine Drehachse **5** drehantreibbare Häckseltrommel **6** auf.

Außerdem umfasst das Häckselorgan **2** eine Mehrzahl von an der Häckseltrommel **6** gelagerten Messern **7,** die jeweils mindestens eine Messerschneide **9** aufweisen. Weiterhin ist eine Gegenschneide **19** vorgesehen, wobei die Gegenschneide **19** und die Messer **7** derart zusammenwirken, dass diese miteinander in Eingriff kommen und somit eingeleitetes Erntegut zerkleinern können. Mit anderen Worten rotiert die Häckseltrommel **6** um die Drehachse **5,** sodass die an der Häckseltrommel **6** gelagerten Messer **7** im Zuge dieser Rotation immer wieder in Eingriff mit der Gegenschneide **19** kommen.

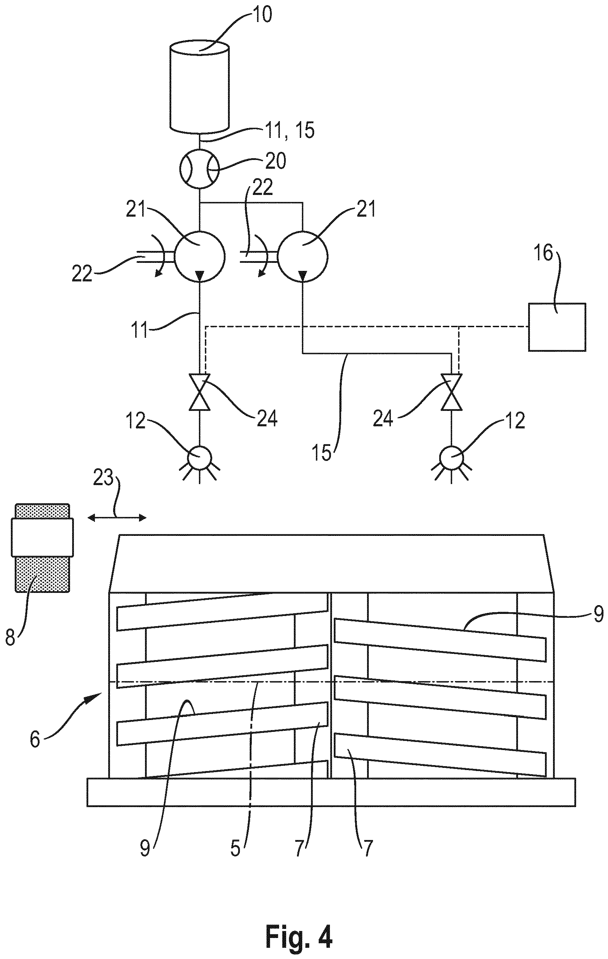

Des Weiteren weist die Schleifeinrichtung **3** vorliegend ein Schleifelement **8** auf, das dazu geeignet ist, im Zuge eines Schleifvorgangs in schleifenden Kontakt mit den Messerschneiden **9** der Messer **7** zu treten und die Messerschneiden **9** auf diese Weise zu schleifen. Das Schleifelement **8** kann insbesondere von einem Schleifstein gebildet sein. Wie **Figur 2** deutlich zeigt, weist die Häckseltrommel **6** eine Gleitschiene **18** auf, die sich zumindest im Wesentlichen über eine gesamte Breite der Häckseltrommel **6** erstreckt, und auf der ein Fahrschlitten **13** bewegbar angeordnet ist. Vorliegend ist das Schleifelement **8** auf dem Fahrschlitten **13** angeordnet, der - wie in Zusammenschau der **Figuren 2** **und** **4** erkennbar ist - mitsamt dem Schleifelement **8** in Richtung des Pfeils **23** und somit über eine gesamte Breite der Häckseltrommel **6** auf beziehungsweise entlang der Gleitschiene **18** bewegt werden kann. Hierdurch kann das Schleifelement **8** im Zuge eines Schleifvorgangs zumindest im Wesentlichen solche Stellen der Messerschneiden **9** erreichen, die im laufenden Betrieb abgenutzt werden.

Außerdem umfasst die Behandlungsvorrichtung **4** vorliegend zwei Behälter **10, 14** - wie in **Figur 1** erkennbar ist - zur Vorhaltung eines fließfähigen Behandlungsmediums, eine Leitung **11** zur Leitung des Behandlungsmediums von dem Behälter **10** in Richtung der Schleifeinrichtung 3 sowie vorliegend eine Mehrzahl von Düsen **12,** von denen in **Figur 4** exemplarisch nur zwei dargestellt sind. Mittels der Düsen **12** ist das Behandlungsmedium ausbringbar ist. Bei dem Behandlungsmedium, das in dem ersten Behälter **10** gelagert ist, handelt es sich vorliegend um eine Kühlflüssigkeit und bei dem weiteren Behandlungsmedium, das in dem weiteren Behälter **14** gelagert ist, um eine Schleifemulsion. Der weitere Behälter **14** ist mittels einer weiteren Leitung **15** in strömungstechnischer Weise mit der Schleifeinrichtung **3** verbunden.

Die Behandlungsvorrichtung **4** ist dazu eingerichtet, im Zuge eines Schleifvorgangs eines oder beide Behandlungsmedien auf das Schleifelement **8** zu leiten. Dazu umfasst die Behandlungsvorrichtung **4** gemäß **Figur 4** vorliegend Pumpen **21,** die mittels einer Antriebswelle **22** betrieben werden. Die Antriebswelle **22** ist vorliegend mit einem Antrieb des Feldhäckslers **1** verbunden. Außerdem ist eine Messeinrichtung **20** vorgesehen, die den Pumpen **21** vorgeschaltet ist. Mit anderen Worten ist die Messeinrichtung **20** dem Behälter **11** nachgeschaltet und den Pumpen **21** vorgeschaltet, wobei mittels der Messeinrichtung **20** beispielsweise ein Volumenstrom und/oder eine Temperatur und/oder eine Zusammensetzung des Behandlungsmediums ermittelt werden kann. In diesem Zusammenhang ist es beispielsweise denkbar, die Behandlungsmedien aus den Behältern **10, 14** entweder abwechselnd oder gleichzeitig, also gemischt, zugeführt werden. Darüber hinaus ist eine Steuerung **16** vorgesehen. Mittels der Steuerung **16** können von der Messeinrichtung **20** ermittelte Daten ausgewertet und dementsprechend Signale an die Pumpen **21** übermittelt werden, sodass diese in einer gewünschten Weise betreibbar sind.

Wie in **Figur 4** erkennbar ist, sind die Düsen **12** voneinander beabstandet angeordnet, wobei die Düsen **12** in dem gezeigten Beispiel über eine Breite der Häckseltrommel **6** verteilt angeordnet sind, vorzugsweise äquidistant. Im Zuge des Schleifvorgangs bewegt sich das Schleifelement **8** zumindest im Wesentlichen über die gesamte Breite der Häckseltrommel **6** und kommt somit zeitweise in einen jeweiligen Wirkbereich der Düsen **12,** in dem ein Austrag von Behandlungsmedium mittels der jeweiligen Düse **12** vorzugsweise unmittelbar auf das Schleifelement **8** stattfindet. In diesem Zusammenhang ist es vorgesehen, dass jeweils die Düse(n) **12** aktiviert ist bzw. sind und somit Behandlungsmedium ausbringt bzw. ausbringen, die in unmittelbarer Umgebung der Schleifstelle ist, an der sich der Schleifstein **8** aktuell in schleifendem Eingriff mit den Messern **7** befindet. Vorliegend ist den Düsen **12** jeweils ein Ventil **24** zugeordnet, das derart geöffnet oder geschlossen werden kann, dass die Düsen **12** wechselweise aktivierbar beziehungsweise deaktivierbar sind. Die Ventile **24** sind getrennt ansteuerbar, sodass mittels der Steuerung **16** das Leiten eines Behandlungsmediums auf den Schleifstein **8** besonders einfach in Abhängigkeit einer aktuellen Position des Schleifsteins **8** relativ zu der Häckseltrommel **6** einstellbar ist.

### Bezugszeichenliste

- 1: Feldhäcksler
- 2: Häckselorgan
- 3: Schleifeinrichtung
- 4: Behandlungsvorrichtung
- 5: Drehachse
- 6: Häckseltrommel
- 7: Messer
- 8: Schleifelement
- 9: Messerschneide
- 10: Behälter
- 11: Leitung
- 12: Düse
- 13: Fahrschlitten
- 14: Behälter
- 15: Leitung
- 16: Steuerung
- 17: Maisgebiss
- 18: Gleitschiene
- 19: Gegenschneide
- 20: Messeinrichtung
- 21: Pumpe
- 22: Antriebswelle
- 23: Pfeil
- 24: Ventil

## Patentansprüche

1. Selbstfahrender Feldhäcksler (1), umfassend
- eine Mehrzahl von Arbeitsorganen sowie
- mindestens eine Behandlungsvorrichtung (4),
wobei zumindest ein Arbeitsorgan von einem Häckselorgan (2) und mindestens ein weiteres Arbeitsorgan von einer Schleifeinrichtung (3) gebildet sind,
wobei das Häckselorgan (2) eine um eine Drehachse (5) drehantreibbare Häckseltrommel (6) sowie eine Mehrzahl von an der Häckseltrommel (6) gelagerten Messern (7) aufweist,
wobei die Schleifeinrichtung (3) mindestens ein Schleifelement (8) umfasst, das dazu geeignet ist, im Zuge eines Schleifvorgangs in schleifenden Kontakt mit Messerschneiden (9) der Messer (7) zu treten und die Messerschneiden (9) auf diese Weise zu schleifen,
wobei das Schleifelement (8) relativ zu dem Häckselorgan (2) bewegbar ausgebildet ist, sodass das Schleifelement (8) im Zuge eines Schleifvorgangs zumindest im Wesentlichen alle Stellen der Messerschneiden (9) erreichen kann,
wobei die Behandlungsvorrichtung (4) mindestens einen Behälter (10, 14) zur Vorhaltung eines fließfähigen Behandlungsmediums, mindestens eine Leitung (11, 15) zur Leitung des Behandlungsmediums von dem Behälter (10, 14) in Richtung der Schleifeinrichtung (3) sowie eine Mehrzahl von Düsen (12) umfasst, mittels derer das Behandlungsmedium ausbringbar ist,
wobei die Düsen (12) entlang der Häckseltrommel (6) verteilt sowie korrespondierend zu einem Bewegungsraum des Schleifelements (8) angeordnet sind, sodass im Zuge eines Schleifvorgangs das Behandlungsmedium mittels der Düsen (12) auf das Schleifelement (8) leitbar ist,
**dadurch gekennzeichnet, dass**
die Düsen (12) in Abhängigkeit einer aktuellen Position des Schleifelements (8) im Zuge eines Schleifvorgangs wechselweise aktivierbar und deaktivierbar sind.

2. Feldhäcksler (1) nach Anspruch 1, **dadurch gekennzeichnet, dass** die Düsen (12) jeweils mit einem Ventil (24) zusammenwirken, wobei die Ventile (24) getrennt ansteuerbar und die Düsen (12) auf diese Weise wechselweise aktivierbar und deaktivierbar sind.

3. Feldhäcksler (1) nach einem der vorhergehenden Ansprüche, **dadurch gekennzeichnet, dass** die Behandlungsvorrichtung (4) dazu eingerichtet ist, zu jedem Zeitpunkt eines jeweiligen Schleifvorgangs nur die Düsen (12) zu aktivieren, die in Abhängigkeit einer Position des Schleifelements (8) dazu geeignet sind, das Behandlungsmedium unmittelbar auf das Schleifelement (8) zu leiten.

4. Feldhäcksler (1) nach einem der vorhergehenden Ansprüche, **gekennzeichnet durch** eine Steuerung (16), mittels der eine Zuleitung mindestens eines von der Behandlungsvorrichtung (4) vorgehaltenen Behandlungsmediums zu dem Schleifelement (8) steuerbar ist.

5. Feldhäcksler (1) nach einem der vorhergehenden Ansprüche, **dadurch gekennzeichnet, dass** das Schleifelement (8) während eines Schleifvorgangs parallel zu der Drehachse (5) der Häckseltrommel (6) bewegbar ist.

6. Feldhäcksler (1) nach einem der vorhergehenden Ansprüche, **dadurch gekennzeichnet, dass** mindestens ein Behandlungsmedium von einer Kühlflüssigkeit oder von einer Schleifemulsion gebildet ist.

7. Feldhäcksler (1) nach einem der vorhergehenden Ansprüche, **dadurch gekennzeichnet, dass** die Behandlungsvorrichtung (4) mindestens einen weiteren Behälter (14) aufweist, der zur Vorhaltung eines weiteren fließfähigen Behandlungsmediums eingerichtet ist, wobei die Behandlungsvorrichtung (4) mindestens eine Leitung (15) zur Leitung des weiteren Behandlungsmediums von dem weiteren Behälter (14) in Richtung der Schleifeinrichtung (3) umfasst.

8. Feldhäcksler (1) nach Anspruch 7, **dadurch gekennzeichnet, dass** die Behandlungsvorrichtung (4) dazu eingerichtet ist, im Zuge eines Schleifvorgangs dem Schleifelement (8) wechselweise das erste oder das weitere Behandlungsmedium oder beide Behandlungsmedien zugleich zuzuführen.

9. Verfahren zum Betrieb eines selbstfahrenden Feldhäckslers (1), der Feldhäcksler (1) umfassend
- eine Mehrzahl von Arbeitsorganen sowie
- mindestens eine Behandlungsvorrichtung (4),
wobei zumindest ein Arbeitsorgan von einem Häckselorgan (2) und mindestens ein weiteres Arbeitsorgan von einer Schleifeinrichtung (3) gebildet sind,
wobei das Häckselorgan (2) eine um eine Drehachse (5) drehantreibbare Häckseltrommel (6) sowie eine Mehrzahl von an der Häckseltrommel (6) gelagerten Messern (7) aufweist,
wobei die Schleifeinrichtung (3) mindestens ein Schleifelement (8) umfasst, das dazu geeignet ist, im Zuge eines Schleifvorgangs in schleifenden Kontakt mit Messerschneiden (9) der Messer (7) zu treten und die Messerschneiden (9) auf diese Weise zu schleifen,
wobei das Schleifelement (8) relativ zu dem Häckselorgan (2) bewegbar ausgebildet ist, sodass das Schleifelement (8) im Zuge eines Schleifvorgangs zumindest im Wesentlichen alle Stellen der Messerschneiden (9) erreichen kann,
wobei die Behandlungsvorrichtung (4) mindestens einen Behälter (10, 14) zur Vorhaltung eines fließfähigen Behandlungsmediums, mindestens eine Leitung (11, 15) zur Leitung des Behandlungsmediums von dem Behälter (10, 14) in Richtung der Schleifeinrichtung (3) sowie eine Mehrzahl von Düsen (12) umfasst, mittels derer das Behandlungsmedium ausbringbar ist,
wobei die Düsen (12) entlang der Häckseltrommel (6) verteilt sowie korrespondierend zu einem Bewegungsraum des Schleifelements (8) angeordnet sind, sodass im Zuge eines Schleifvorgangs das Behandlungsmedium mittels der Düsen (12) auf das Schleifelement (8) leitbar ist,
**dadurch gekennzeichnet, dass**
die Düsen (12) in Abhängigkeit einer aktuellen Position des Schleifelements (8) im Zuge eines Schleifvorgangs wechselweise aktiviert oder deaktiviert werden.

10. Verfahren nach Anspruch 9, **dadurch gekennzeichnet, dass** zu jedem Zeitpunkt eines jeweiligen Schleifvorgangs nur die Düsen (12) aktiviert werden, die in Abhängigkeit einer Position des Schleifelements (8) dazu geeignet sind, das Behandlungsmedium unmittelbar auf das Schleifelement (8) zu leiten.

11. Verfahren nach einem der vorhergehenden Ansprüche, **dadurch gekennzeichnet, dass** die Zuleitung mindestens eines Behandlungsmediums, insbesondere eines Kühlmediums oder einer Schleifemulsion, mittels einer Steuerung (16) in Abhängigkeit von
- von Maschinendaten des Feldhäckslers (1),
- einer Menge von im Zuge eines Schleifvorgangs ausgebrachten Volumens des jeweiligen Behandlungsmediums, und/oder
- in Abhängigkeit einer Feuchtigkeit des jeweiligen Ernteguts
gesteuert wird.

12. Verfahren nach einem der vorhergehenden Ansprüche, **dadurch gekennzeichnet, dass** ein Volumenstrom des jeweiligen Behandlungsmediums im Zuge eines Schleifvorgangs oder zwischen verschiedenen Schleifvorgängen verändert wird.

## Claims

1. A self-propelled forage harvester (1), comprising
- a plurality of working units, as well as
- at least one treatment device (4),
wherein at least one working unit is formed by a chopping unit (2) and at least one further working unit is formed by a sharpening means (3),
wherein the chopping unit (2) has a chopping drum (6) which can be driven in rotation about an axis of rotation (5) as well as a plurality of knives (7) mounted on the chopping drum (6),
wherein the sharpening means (3) comprises at least one sharpening element (8) which is suitable for coming into sharpening contact with knife edges (9) of the knives (7) during a sharpening procedure and for sharpening the knife edges (9) in this manner,
wherein the sharpening element (8) is configured so as to be movable relative to the chopping unit (2), so that the sharpening element (8) can reach at least substantially all points of the knife edges (9) during a sharpening procedure,
wherein the treatment device (4) comprises at least one container (10, 14) for holding a flowable treatment medium, at least one line (11, 15) for guiding the treatment medium from the container (10, 14) in the direction of the sharpening means (3), as well as a plurality of nozzles (12), by means of which the treatment medium can be dispensed,
wherein the nozzles (12) are spaced along the chopping drum (6) as well as being disposed so as to correspond to a range of movement of the sharpening element (8), so that during a sharpening procedure, the treatment medium can be guided onto the sharpening element (8) by means of the nozzles (12),
**characterized in that**
the nozzles (12) can be activated and deactivated in alternation during a sharpening procedure as a function of a current position of the sharpening element (8).

2. The forage harvester (1) according to claim 1, **characterized in that** the nozzles (12) respectively cooperate with a valve (24), wherein the valves (24) can be separately controlled and in this manner, the nozzles (12) can be activated and deactivated in alternation.

3. The forage harvester (1) according to one of the preceding claims, **characterized in that** the treatment device (4) is configured such that, at any time of a respective sharpening procedure, only those nozzles (12) are activated which, as a function of a position of the sharpening element (8), are suitable for guiding the treatment medium directly onto the sharpening element (8).

4. The forage harvester (1) according to one of the preceding claims, **characterized by** a controller (16), by means of which a supply of at least one treatment medium held in the treatment device (4) to the sharpening element (8) can be controlled.

5. The forage harvester (1) according to one of the preceding claims, **characterized in that** during a sharpening procedure, the sharpening element (8) can be moved parallel to the axis of rotation (5) of the chopping drum (8).

6. The forage harvester (1) according to one of the preceding claims, **characterized in that** at least one treatment medium is formed by a cooling liquid or by a sharpening emulsion.

7. The forage harvester (1) according to one of the preceding claims, **characterized in that** the treatment device (4) has at least one further container (14) which is configured to hold a further flowable treatment medium, wherein the treatment device (4) comprises at least one line (15) for guiding the further treatment medium from the further container (14) in the direction of the sharpening device (3).

8. The forage harvester (1) according to claim 7, **characterized in that** the treatment device (4) is configured to supply the sharpening element (8) alternately with the first or the further treatment medium or with both treatment media at the same time during a sharpening procedure.

9. A method for operating a self-propelled forage harvester (1), the forage harvester (1) comprising:
- a plurality of working units, as well as
- at least one treatment device (4),
wherein at least one working unit is formed by a chopping unit (2) and at least one further working unit is formed by a sharpening means (3),
wherein the chopping unit (2) has a chopping drum (6) which can be driven in rotation about an axis of rotation (5) as well as a plurality of knives (7) mounted on the chopping drum (6),
wherein the sharpening means (3) comprises at least one sharpening element (8) which is suitable for coming into sharpening contact with knife edges (9) of the knives (7) during a sharpening procedure and for sharpening the knife edges (9) in this manner,
wherein the sharpening element (8) is configured so as to be movable relative to the chopping unit (2), so that the sharpening element (8) can reach at least substantially all points of the knife edges (9) during a sharpening procedure,
wherein the treatment device (4) comprises at least one container (10, 14) for holding a flowable treatment medium, at least one line (11, 15) for guiding the treatment medium from the container (10, 14) in the direction of the sharpening means (3), as well as a plurality of nozzles (12), by means of which the treatment medium can be dispensed,
wherein the nozzles (12) are spaced along the chopping drum (6) as well as being disposed so as to correspond to a range of movement of the sharpening element (8), so that during a sharpening procedure, the treatment medium can be guided onto the sharpening element (8) by means of the nozzles (12),
**characterized in that**
the nozzles (12) are activated and deactivated in alternation during a sharpening procedure as a function of a current position of the sharpening element (8).

10. The method according to claim 9, **characterized in that** at any time of a respective sharpening procedure, only those nozzles (12) are activated which, as a function of a position of the sharpening element (8), are suitable for guiding the treatment medium directly onto the sharpening element (8).

11. The method according to one of the preceding claims, **characterized in that** the supply of at least one treatment medium, in particular a cooling medium or a sharpening emulsion, is controlled by means of a controller (16) as a function of
- machine data of the forage harvester (1),
- a quantity of the respective volume of treatment medium dispensed during a sharpening procedure, and/or
- a moisture content of the respective harvested material.

12. The method according to one of the preceding claims, **characterized in that** a volumetric flow of the respective treatment medium is varied during a sharpening procedure or between different sharpening procedures.

## Revendications

1. Ramasseuse-hacheuse automotrice (1), comprenant
- une pluralité d'organes de travail et
- au moins un dispositif de traitement (4),
où au moins un organe de travail est constitué d'un organe de hachage (2), et au moins un autre organe de travail est constitué d'un dispositif d'affûtage (3),
où l'organe de hachage (2) présente un tambour hacheur (6) pouvant être entraîné en rotation autour d'un axe de rotation (5), ainsi qu'une pluralité de couteaux (7) montés sur le tambour hacheur (6),
où le dispositif d'affûtage (3) comprend au moins un élément d'affûtage (8) qui est adapté pour entrer en contact d'affûtage avec des lames (9) des couteaux (7), dans le cadre d'une opération d'affûtage, et pour affûter ainsi les lames de couteau (9),
où l'élément d'affûtage (8) est réalisé de manière à pouvoir être déplacé par rapport à l'organe de hachage (2), de sorte que dans le cadre d'une opération d'affûtage, l'élément d'affûtage (8) peut atteindre au moins sensiblement tous les emplacements des lames de couteau (9),
où le dispositif de traitement (4) comprend au moins un récipient (10, 14) pour la mise à disposition d'un milieu de traitement fluide, au moins une conduite (11, 15) pour amener le milieu de traitement depuis le récipient (10, 14) en direction du dispositif d'affûtage (3), ainsi qu'une pluralité de buses (12) permettant de distribuer le fluide de traitement,
où les buses (12) sont disposées en étant réparties le long du tambour hacheur (6) et en correspondant à un espace de mouvement de l'élément d'affûtage (8), de sorte que dans le cadre d'une opération d'affûtage, le fluide de traitement peut être dirigé sur l'élément d'affûtage (8) à l'aide des buses (12),
**caractérisée en ce que**
les buses (12) peuvent être activées et désactivées en alternance dans le cadre d'une opération d'affûtage, en fonction d'une position actuelle de l'élément d'affûtage (8).

2. Ramasseuse-hacheuse (1) selon la revendication 1, **caractérisée en ce que** les buses (12) coopèrent chacune avec une vanne (24), les vannes (24) pouvant être activées séparément, et les buses pouvant ainsi être activées et désactivées en alternance.

3. Ramasseuse-hacheuse (1) selon une des revendications précédentes, **caractérisée en ce que** le dispositif de traitement (4) est agencé pour activer, à chaque instant d'une opération d'affûtage respective, uniquement les buses (12) qui, en fonction d'une position de l'élément d'affûtage (8), sont adaptées pour diriger le fluide de traitement directement sur l'élément d'affûtage (8).

4. Ramasseuse-hacheuse (1) selon une des revendications précédentes, **caractérisée par** une commande (16) qui permet de contrôler une amenée d'au moins un fluide de traitement mis à disposition par le dispositif de traitement (4), à l'élément d'affûtage (8).

5. Ramasseuse-hacheuse (1) selon une des revendications précédentes, **caractérisée en ce que** pendant une opération d'affûtage, l'élément d'affûtage (8) peut être déplacé parallèlement à l'axe de rotation (5) du tambour hacheur (6).

6. Ramasseuse-hacheuse (1) selon une des revendications précédentes, **caractérisée en ce qu'**au moins un fluide de traitement est constitué d'un liquide de refroidissement ou d'une émulsion abrasive.

7. Ramasseuse-hacheuse (1) selon une des revendications précédentes, **caractérisée en ce que** le dispositif de traitement (4) présente au moins un récipient (14) supplémentaire qui est agencé pour mettre à disposition un milieu de traitement fluide supplémentaire, le dispositif de traitement (4) comprenant au moins une conduite (15) pour amener le fluide de traitement supplémentaire depuis le récipient (14) supplémentaire en direction du dispositif d'affûtage (3).

8. Ramasseuse-hacheuse (1) selon la revendication 7, **caractérisée en ce que** le dispositif de traitement (4) est agencé pour amener, dans le cadre d'une opération d'affûtage, en alternance le premier fluide de traitement ou le fluide de traitement supplémentaire, ou les deux en même temps, à l'élément d'affûtage (8).

9. Procédé de fonctionnement d'une ramasseuse-hacheuse automotrice (1), la ramasseuse-hacheuse (1) comprenant
- une pluralité d'organes de travail et
- au moins un dispositif de traitement (4),
où au moins un organe de travail est constitué d'un organe de hachage (2) et au moins un autre organe de travail est constitué d'un dispositif d'affûtage (3),
où l'organe de hachage (2) présente un tambour hacheur (6) pouvant être entraîné en rotation autour d'un axe de rotation (5), ainsi qu'une pluralité de couteaux (7) montés sur le tambour hacheur (6),
où le dispositif d'affûtage (3) comprend au moins un élément d'affûtage (8) qui est adapté pour entrer en contact d'affûtage avec des lames (9) des couteaux (7), dans le cadre d'une opération d'affûtage, et pour affûter ainsi les lames de couteau (9),
où l'élément d'affûtage (8) est réalisé de manière à pouvoir être déplacé par rapport à l'organe de hachage (2), de sorte que dans le cadre d'une opération d'affûtage, l'élément d'affûtage (8) peut atteindre au moins sensiblement tous les emplacements des lames de couteau (9),
où le dispositif de traitement (4) comprend au moins un récipient (10, 14) pour la mise à disposition d'un milieu de traitement fluide, au moins une conduite (11, 15) pour amener le milieu de traitement depuis le récipient (10, 14) en direction du dispositif d'affûtage (3), ainsi qu'une pluralité de buses (12) permettant de distribuer le fluide de traitement,
où les buses (12) sont disposées en étant réparties le long du tambour hacheur (6) et en correspondant à un espace de mouvement de l'élément d'affûtage (8), de sorte que dans le cadre d'une opération d'affûtage, le fluide de traitement peut être dirigé sur l'élément d'affûtage (8) au moyen des buses (12),
**caractérisé en ce que**
les buses (12) peuvent être activées et désactivées en alternance dans le cadre d'une opération d'affûtage, en fonction d'une position actuelle de l'élément d'affûtage (8).

10. Procédé selon la revendication 9, **caractérisé en ce qu'**à chaque instant d'une opération d'affûtage respective, seules sont activées les buses (12) qui, en fonction d'une position de l'élément d'affûtage (8), sont adaptées pour diriger le fluide de traitement directement sur l'élément d'affûtage (8).

11. Procédé selon une des revendications précédentes, **caractérisé en ce que** l'amenée d'au moins un fluide de traitement, notamment d'un fluide de refroidissement ou d'une émulsion abrasive, est contrôlée au moyen d'une commande (16), en fonction
- de données machine de la ramasseuse-hacheuse (1),
- d'une quantité d'un volume du fluide de traitement respectif distribué dans le cadre d'une opération d'affûtage,
- en fonction d'une humidité des produits récoltés respectifs.

12. Procédé selon une des revendications précédentes, **caractérisé en ce qu'**un flux volumique du fluide de traitement respectif est modifié au cours d'une opération d'affûtage ou entre des opérations d'affûtage différentes.
